Europäisches Patentamt

European Patent Office

Office européen des brevets

(11) Publication number: **0 133 631**
**A1**

## (12) EUROPEAN PATENT APPLICATION

(21) Application number: **83304564.4**

(22) Date of filing: **08.08.83**

(51) Int. Cl.⁴: **F 24 D 3/00**

(43) Date of publication of application:
**06.03.85 Bulletin 85/10**

(84) Designated Contracting States:
**AT BE CH DE FR GB IT LI LU NL SE**

(71) Applicant: **Devon County Council**
**County Hall**
**Exeter Devon EX2 4QW(GB)**

(71) Applicant: **Evans, Joseph John**
**3, Garfield Terrace**
**Stoke Plymouth Devon(GB)**

(71) Applicant: **Thornley, Robert**
**3, Hawksland Cottages**
**Higher Tremarcoombe Liskeard Cornwall(GB)**

(72) Inventor: **Evans, Joseph John**
**3, Garfield Terrace**
**Stoke Plymouth, Devon(GB)**

(72) Inventor: **Thornley, Robert**
**3, Hawksland Cottages Higher Tremarcoombe**
**Liskeard Cornwall(GB)**

(74) Representative: **Squibbs, Robert Francis et al,**
**M. J. Stephens & Co. 46 Tavistock Place**
**Plymouth PL4 8AX(GB)**

(54) **Heat transfer panel and an underfloor heating or cooling system employing the same.**

(57) An underfloor heating/cooling system is provided having panels (4) with a low thermal capacity per unit area which enable the heating system to respond rapidly to temperature change. In one embodiment, each panel (4) comprises an upper layer (30) made of a fibre-reinforced thermosetting compound throughout which is dispersed a substance, such as sand, for improving the thermal conductivity of the layer (30). Beneath this upper layer (30) is a heat exchange layer (32, 34) similar to the upper layer (30) but embedded within which are pipes (33) for passing warm water through the panel. The heat-exchange layer (32, 34) is backed by an insulating layer (35). The panels are also suitable for use as wall heating/cooling panels and solar collecting panels.

*Fig.2.*

EP 0 133 631 A1

## Heat Transfer Panel and an Underfloor Heating or Cooling System employing the same.

The present invention relates to heat transfer panels and, in particular, but not exclusively, to an underfloor heating or cooling system employing such panels.

The use of underfloor radiant heating systems for heating houses and other premises is attractive for a number of reasons, including that such systems:

1) provide a high level of thermal comfort;
2) do not restrict furniture layouts or cause the unsightly marking of walls associated with convector heaters;
3) are energy saving in comparison with convective heating systems (this is due mainly to the fact that air temperatures in radiant heating systems tend on the whole to be less than those with convective heating systems, so that the ventilation heat loss will be less).

With regard to thermal comfort, although this is a subjective quantity, it may generally be stated that optimum comfort conditions are experienced when the mean radiant temperature of the surroundings is a few degrees higher than the air temperature. This produces a "fresh" rather than a "stuffy" environment. Radiant heating systems can produce these optimum conditions, whereas convective heating systems tend to produce the opposite.

Another factor which affects thermal comfort is the vertical temperature gradient in a room; in this respect, the temperature at head level should be little, if any, in excess of that at floor level, and there should not be excessive radiation towards the heads of the occupants. These thermal conditions can most easily be produced by using underfloor radiant heating systems. Such systems produce an almost constant vertical temperature gradient; in contrast, convective heating systems generally produce large vertical temperature gradients.

Underfloor heating systems are, of course, well know, the first such systems being used in Greek and Roman times. In these hypocaust systems, hot air and smoke from a furnace were passed beneath the stone floor, and in later times, upwards through cavities in the walls. As the floor and walls became heated by the hot gases, heat was convected and radiated into the room.

More recent underfloor heating systems normally employ warm water as opposed to hot air. Copper, mild steel or plastic pipes are embedded in a concrete slab or in screed to a depth of between 37 mm and 75 mm. The warm water heats the floor slab and the heat is radiated and convected into the room. The massive construction of such radiant slabs means that they have a large thermal capacity so that it may take between four and five hours for the floor surface temperature to change by $15^{\circ}$C.

With the current trend towards designing houses with very low heat loss (a design heat loss of approximately 4 to 5KW for a semi-detached house is now practicable as compared to 11 to 12 KW in the 1960's), problems have arisen with the control of heating systems, such as conventional underfloor radiant systems, which have a slow response time. These problems arise because well insulated structures are slow to respond to changes in the output of the heating system and to changes in the weather conditions; thus, for example, in a computer simulation of a house with a design heat loss of 3-4 KW, it has been found that on a clear winter's day with a mean external temperature of $6.5^{O}C$, solar gains produce overheating in the house, which is particularly bad in South facing rooms. If the problem of overheating due to solar gains is not to be exacerbated the house heating system must be able to react quickly to changes in weather conditions.

In countries with high daytime temperatures, the same type of flooring installation as used for an underfloor heating system could be employed as part of an underfloor cooling system; again, however, due to the rapid temperature drop often experienced at nightfall in such countries, the underfloor system must be able to react quickly to changing conditions.

It is an object of the present invention to provide an underfloor heating or cooling system capable of reacting quickly to changes in ambient temperature.

According to one aspect of the present invention, there is provided an underfloor heating or cooling system comprising a floor panel having an upper layer formed of a material of good thermal conductivity, and heat transfer means for conducting a heat transfer fluid past the upper layer of the panel in heat exchange relation therewith, the floor panel having a low thermal capacity per unit area.

By arranging for the panels to have a low thermal capacity (preferably less than 140 $KJ/m^{2O}C$), the underfloor heating or cooling system can be made to respond quickly to ambient temperature changes.

Advantageously the panel comprises a fibre-reinforced mass of thermosetting plastics material within which is embedded piping forming part of the heat transfer means, the thermal conductivity of the plastics material being increased by the use of a suitable filler. Panels of this form are easily handled, laid and connected up. Indeed, these panels can be used not only as underfloor heating/cooling panels but also as wall or ceiling panels.

Thus, in another aspect, the present invention provides a heat-transfer panel comprising a fibre-reinforced mixture of a thermosetting plastics material and a filler which serves to increase the thermal conductivity of the mixture, and piping integral with said mixture and serving to conduct a heat transfer fluid through the panel, the panel having a low thermal capacity per unit area.

An underfloor heating system embodying the invention will now be particularly described, by way of example, with reference to the accompanying diagrammatic drawings, in which:

Figure 1 is a sectional view of the floor and foundations of a house showing a prior art underfloor heating system;
Figure 2 is a cross-section through a first form of panel embodying the present invention, the panel being shown supported on a timber sub-structure;
Figure 3 is a cross-section through a second form of panel embodying the invention; and
Figure 4 is an overall schematic diagram of the underfloor heating system embodying the invention.

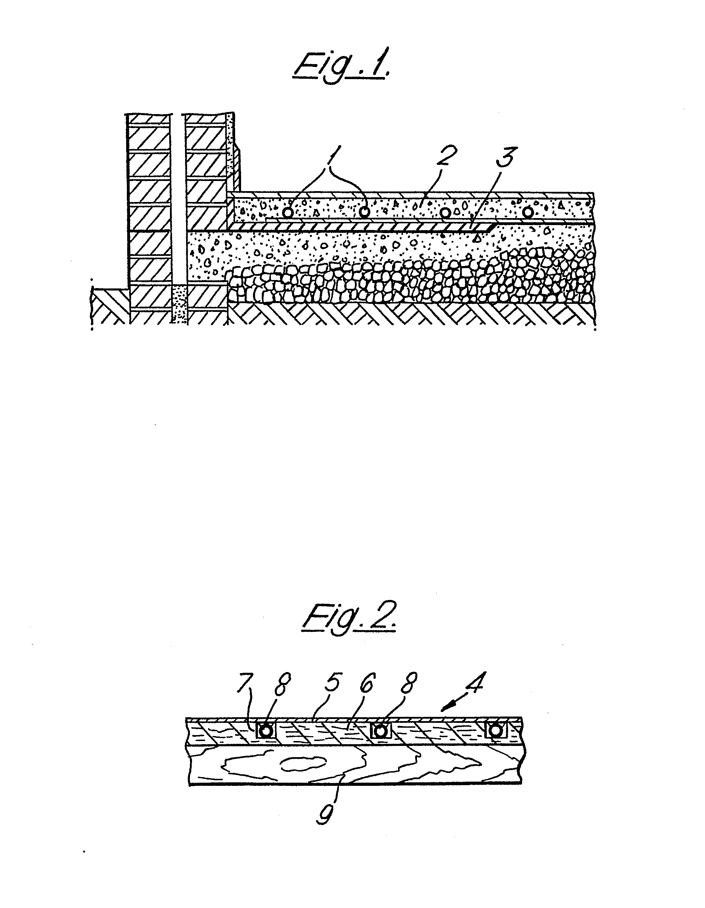

Shown in Figure 1 is a known underfloor heating system in which pipes 1 are embedded in a concrete screed 2 above a layer of insulation 3. Upon warm water being circulated through the pipes 1, the concrete screed 2 slowly heats up and radiates heat out into the interior of the house. Due to the large mass of the concrete screed 2, the heating system has a large thermal capacity and thus considerable thermal inertia.

Figure 2 shows one form of panel 4 embodying the present invention. This panel 4 has a low thermal capacity and comprises a flat metal sheet 5 (for example of copper) bonded to the upper surface of flooring grade chipboard 6. Located in grooves 7 formed in the chipboard 6 are water pipes 8 which are fixed to, or otherwise directly or indirectly in good thermal contact with the back of the sheet 5. The panel 4 is supported on a timber substructure the main load-carrying members 9 of which run transversely of the grooves 7.

The panel 4 of Figure 2 has a much smaller thermal capacity per unit area than the Figure 1 arrangement and is therefore able to respond more rapidly to changing environmental conditions.

Variations to the Figure 2 panel are, of course, possible; thus, for example, the sheet 5 could be formed from a material of good thermal conductivity other than copper and have a lattice structure rather than a continuous one. Furthermore, where the radiant panel is to be laid onto a concrete floor rather than being carried on a timber substructure, then the chipboard 6 could be replaced by a thermally insulating material of low capacity and of sufficient strength in compression to support the sheet 5 but not necessarily with any significant bending strength.

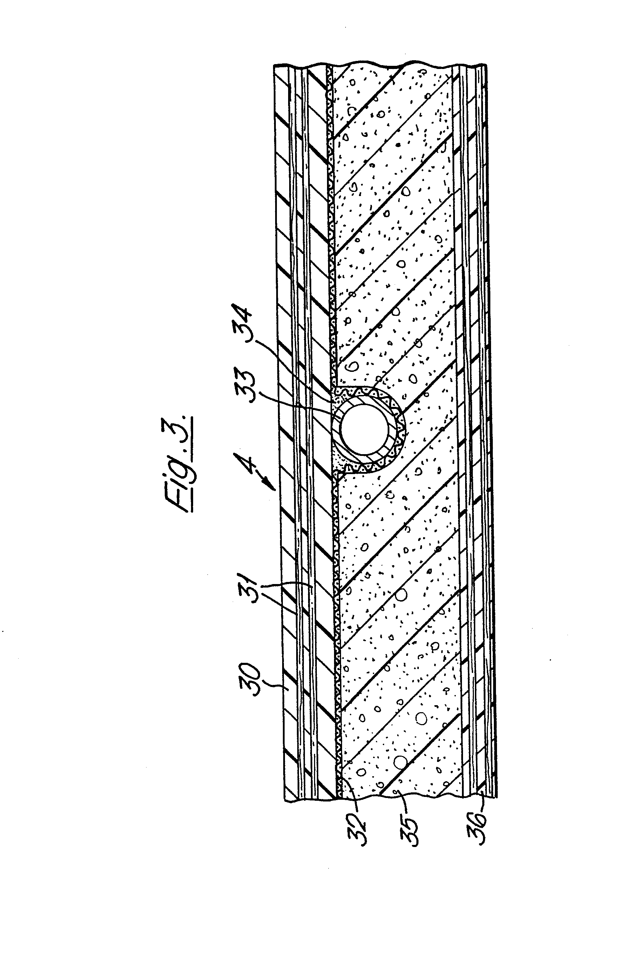

In the form of radiant panel 4 shown in Figure 3, the panel upper layer is formed by a layer 30 of thermosetting plastics material (for example, a polyester resin) throughout which there is dispersed a metal powder, such as aluminium powder, to increase the thermal conductivity of the layer 30. Instead of using a metal powder, another material such as sand, graphite or crushed slate can be used to increase the thermal conductivity of the layer 30; the use of sand in this role is considered particularly suitable due to its cheapness and availability with the sand (for example, dry Lee Moor sand) and resin being mixed in a ratio of 2:1 by volume.

The upper layer 30 is reinforced with a suitable fibre reinforcement such as glass fibre in the form of a cloth, and is backed with a single layer 32 of metal reinforcement (for example, expanded metal or metal netting) which assists in the transfer of heat to the whole of the upper layer 30. The metal reinforcement 32 is formed with parallel rectilinear grooves at approximately 100 mm spacing and with semi-circular grooves which serially interconnect the rectilinear grooves at their ends into a sinuous configuration. These grooves serve to seat plastic or metal pipes 33 constituting heat transfer means arranged to convey a heat transfer fluid through the panel 4. The pipes 33, may be fastened by plastic tie strips (not shown) to the metal reinforcement 32 to hold them in position during construction of the panel. The metal reinforcement 32 and sinuous pipe grid are embedded in thermosetting plastics material 34 which preferably incorporates a metal powder (such as aluminium) or other filler (such as sand, graphite or crushed slate) to increase its thermal conductivity, this embedding material being applied in paste form during panel construction and serving to combine the pipes 33 and metal reinforcement 32 integrally with the panel upper layer 30. The thermosetting resin material 34 in which the pipes 33 and metal reinforcement 32 are embedded, constitutes in conjunction with the metal reinforcement 32, a panel heat-exchange layer integrally formed with its associated section of the heat transfer means.

The metal reinforcement 32 can be dispensed with provided that the panel is adequately strong without this component and that the heat exchange layer is sufficiently conductive (for example due to the presence of a conductive filler in the material 34).

An insulating layer 35 of foamed polyurethane (or a material having similar insulating properties and, preferably, good fire resistant or retardant properties) is applied to the back of the heat-exchange layer and is formed to provide a flat back surface. Two or more reinforcing layers 36 (for example, of thermosetting-plastic impregnated glass cloth) are applied to the back of the insulating layer to reinforce the panel 4. The resulting panel 4 is sufficiently strong for it to be used not only on a solid sub-floor but also on hollow joisted floors, the glass cloth and metal reinforcement providing the necessary strength to give support between the joists. The panel 4 also has a low thermal capacity which allows rapid heating or cooling to the required working surface temperature with heat flow beneath being minimised by the incorporation of the foamed plastic insulation.

The dimensions of the Figure 3 panel are, for example 1 m by 1 m by 22 mm.

In order to construct an underfloor heating system utilising panels of the Figure 2 or Figure 3 form, the desired number of panels are laid down and their piping interconnected in series or parallel to a source of warm water controlled by a thermostatic valve. In the event of the room temperature changing significantly due, for example, to solar input through the windows, the thermostatic control valve acts to reduce the flow of warm water from the heat source thereby allowing the surface temperature of the panels to drop relatively quickly.

Experimental results on underfloor heating systems utilising panels of the form illustrated in Figures 1, 2 and 3 have shown that panels embodying the present invention (the panels of Figures 2 and 3) have a lower effective thermal capacity and therefore a faster response time than the prior art panel of Figure 1. More particularly, if it is assumed that the coefficient $\underline{h}$ of upward heat emission (W/m$^2$ $^o$C) is the same for each panel then the ratio of effective thermal capacities of the panels of Figures 1, 2, and 3 is 2.0: 1.4: 1.0.

For $\underline{h}$ equal to a measured value of 19 W/m$^2$ $^o$C, the thermal capacity per unit area for each illustrated panel is given in the following Table. The Table also gives the times taken by the panel surfaces to cool, from an operating temperature, 50% and 90% towards ambient temperature.

| Panel | Time – Hours | | Thermal Capacity |
|---|---|---|---|
| | 50% | 90% | KJ/m$^2$ $^o$C |
| Fig. 3 | 0.4 | 1.5 | 89.0 |
| Fig. 2 | 0.5 | 3.5 | 122.5 |
| Fig. 1 | 2.3 | 6.5 | 180.9 |

The cooling curves are, in fact, exponential in form.

The response time for the Figure 3 panel can be seen to be at least six times as fast as for the Figure 1 concrete panel.

Floor panels embodying the present invention all preferably have a thermal capacity below 140 KJ/m$^2$ $^{o}$C which is well below that of the concrete panel of Figure 1.

In underfloor heating systems, in order to avoid discomfort at the feet, the floor panel surface temperature should be kept below 27$^{o}$C and preferably at 25$^{o}$C. Where a panel is being heated by a heat-transfer liquid such as water, this means that liquid flow temperatures in the panels must be no more than 35-40$^{o}$C depending upon the panel construction and floor covering. In comparison with these flow temperatures, high temperature radiators require flow temperatures of 83$^{o}$C, skirting heaters require 75$^{o}$C and fan convectors require about 45$^{o}$C. It can be seen therefore that liquid-heated underfloor radiant panels require the lowest circulating temperatures of all heating systems.

Since in the context of space heating utilising water as the heat transfer liquid, a heat pump delivers its heat most efficiently when the temperature of the circulating water is lowest, a heat pump will operate more efficiently when used in an underfloor heating system than in other types of heating systems. Indeed, the substantial savings in fuel possible when a heat pump is used in conjunction with an underfloor heating system make its use attractive despite the increased capital cost.

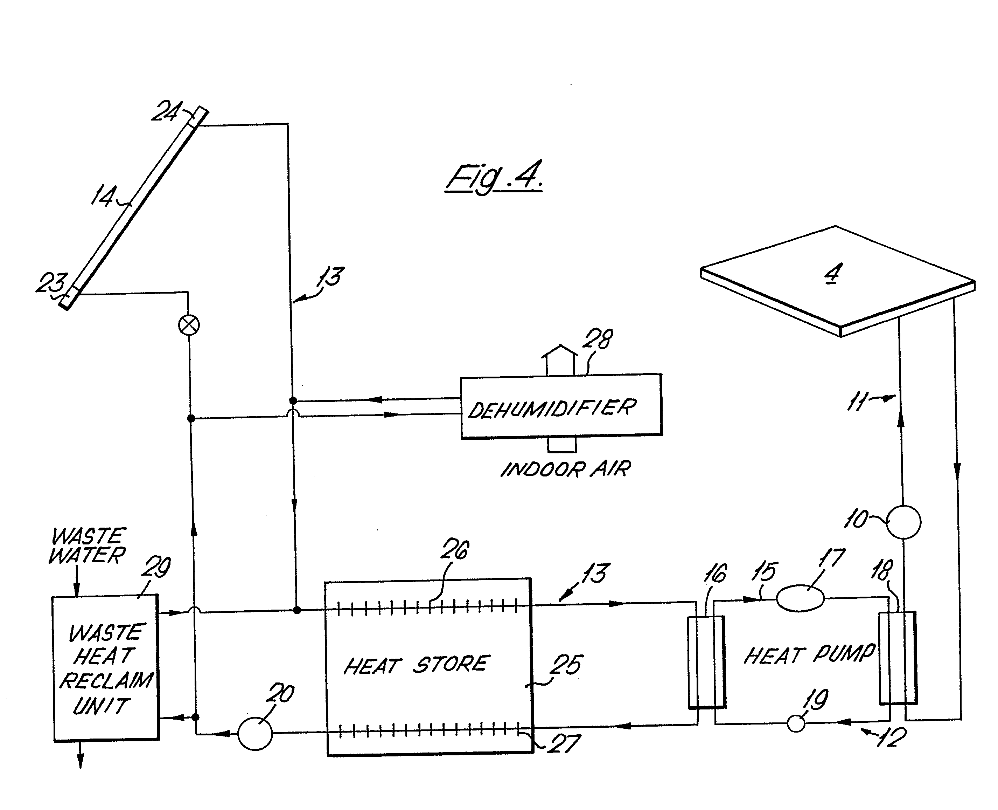

Shown in Figure 4 is an underfloor heating system in which a heat pump 12 is used in conjunction with panels 4 of the Figure 2 and/or the Figure 3 form. The pipes 8, 33 of the panels 4 are inserted in a liquid circuit 11 around which warm water (or other heat-transfer liquid) is circulated by an electric pump 10. The water in the circuit 11 is heated by means of a heat pump 12 which serves to extract heat from a heat-collecting liquid circulating in a circuit 13, and deliver it at a higher temperature to the water in the circuit 11. The heat-collecting liquid in the circuit 13 is, in turn, arranged to be heated by the absorption of solar energy and heat from the surrounding air by passage through energy absorption panels 14 inserted in the circuit 13.

The heat pump 12 comprises a working-fluid circuit 15 in which circulates a working fluid (in the present case, a refrigerant); a first heat exchanger 16, serving as an evaporator, which is used to transfer energy from the low temperature heat-collecting liquid in the circuit 13 to the refrigerant; an electrically-powered compressor 17; a second heat exchanger 18, serving as a condenser, which is used to transfer heat from the refrigerant to the high temperature water in the circuit 11; and an expansion valve 19. The operation of the heat pump 12 is standard and will therefore not be described.

The heat-collecting liquid which provides the source of low grade heat for the heat pump 12 is circulated around its circuit 13 and through the energy absorption panels 14 by means of an electric pump 20. The panels 14 are mounted, for example, on the roof of the building in which the heating system is installed. Each panel may comprise a double skin of metal (for example, copper) with the upper skin being ribbed to provide upwardly extending channels up which the heat-collecting liquid can be passed.  At the
lower and  upper ends of the panel 14, the channels
22 are interconnected by supply and return ducts
23 and 24.

Alternatively, panels  of the form shown in Figures
2 and 3 can be used for the panels 14.

In operation,the heat-collecting liquid (preferably
an antifreeze solution) gains heat from solar
radiation and/or the ambient air as it rises through
the panels 14 under the action of the circulating
pump 20.  This heat is extracted from the heat-collecting
liquid by the heat pump evaporator 16 and its
temperature falls to a few degrees below air temperature;
it is then circulated back to the panels 14.

To improve the performance of the basic energy
collection means formed by the circuit 13 and
absorption panels 14, a water heat store 25  including
heat exchangers 26, 27, is connected into the circuit
13.  The water heat store 25 serves to reduce the
temperature variations of heat-collecting liquid
and to provide a store of energy  for use when
there are adverse weather conditions, and for use
at night.

A dehumidifier 28 and waste heat reclaim unit 29
are also connected into the circuit 13.  These two
units serve to reclaim heat from the building and in
the case of the dehumidifier 28 improve the living
conditions within the building.  These units will
not be described in detail as they form no part
of the present invention.

Although the low thermal capacity panels 4 of
Figure 2 and 3 have been described in relation to
an underfloor heating system, it will be appreciated that the panels 4 can also be used to implement an underfloor cooling system. In this latter case, the arrangement and interconnection of the panels 4 can be the same as for an underfloor heating system, the sole difference being that cold water, rather than warm water, is circulated through the heat transfer means (pipes 8, 33) associated with the panels.

The number of panels 4 used to implement an underfloor heating/cooling system will depend on the characteristics of the room concerned and the coefficient h of upward heat emission of the panels. Generally, the panels 4 will not cover the whole floor area of the room, the remaining area being taken up with ordinary floor panels. Furthermore, while in theory it would be possible to construct on site an underfloor heating system having the same general construction as the panels 4 but formed as a whole rather than as separate panels, it is much easier and more economic to manufacture individual panels in a factory and then connect up the panels on site.

The low thermal capacity panels 4 can also be installed as heating/cooling wall panels. Indeed, such an arrangement of the panels is advantageous for a number of reasons namely, the panels do not have to be load bearing (so that in the case of the Figure 3 panel, the layers 36 can be omitted), the panels can operate with a higher surface temperature (up to 35$^\circ$C as comapred with 27$^\circ$C for an underfloor panel), the panels will generally be covered with a wallpaper (as compared with carpet for underfloor panels) so that their heat emission will be less restricted, and wall mounted panels are generally easier to install than floor panels. Furthermore, since in many situations wall panels will be directly backed by a layer of insulation (for example, a wooden wall or mineral insulation in a stud partition wall), it is possible
in the case of panels of the Figure 3 form to reduce
substantially, and even to eliminate, the insulating
layer 35.

The panels 4 can, of course, also be installed as
ceiling panels.

As already mentioned in relation to the panels 14 of
Figure 4, another use for the low-thermal capacity
panels 4 is as solar collectors. Thus, for example,
panels of the Figure 3 form can be used to lay an
outdoor playing surface such as a tennis court, the
panels 4 being connected up to form a solar collector
having a large area which can be used to provide
warm water for a swimming pool. The use of a
sand filler for the upper layer 30 of the panels would
ensure a good gripping surface.

Various other forms of low thermal capacity panel
are, of course, possible. Thus for example, the panels
need not be provided with integral heat transfer means
as is the case where, in multi-storey premises, panels
are installed as ceiling heating or cooling panels
for one storey and as normal floor panels for the
storey above, the heat transfer means taking the
form of channels provided in the void between the
ceiling and floor panels and through which warm or
cool air can be circulated.

In a further embodiment of the underfloor heating or
cooling system, high thermal capacity heat storage
means, for example in the form of a concrete slab,
are provided to enable use to be made of low-tariff-
period electricity, the slab being heated up or cooled
down during the low tariff period depending on whether the system is a heating or cooling system. The heat transfer means for conveying heat to or from the thermally conductive layer of the floor panel is such as to enable heat transfer to take place in a controlled manner from or to the storage slab, the slab and the floor panel being substantially thermally isolated from each other except through the heat transfer means so as to minimise the thermal capacity of the panel. The storage slab can be provided immediately under the panel or at a distance therefrom.

0133631

## CLAIMS

1. An underfloor heating or cooling system characterised in that it comprises at least one floor panel (4) with an upper layer (5; 30) formed of a material of good thermal conductivity, and heat transfer means (8; 33) for conducting a heat transfer fluid past the panel upper layer (5; 30) in heat exchange relation therewith, the panel (4) having a low thermal capacity per unit area.

2. A system according to Claim 1, wherein the upper layer (30) of the said at least one panel(4) is constituted by a layer of fibre-reinforced thermosetting plastics material throughout which is dispersed a substance serving to increase the thermal conductivity of the layer (30).

3. A system according to Claim 2, wherein the said substanee serving to increase the thermal conductivity is a metal powder, graphite, sand, or crushed slate.

4. A system according to Claim 2, wherein the said at least one panel (4) further comprises a heat-exchange layer (32, 34) backing the upper layer (30) and within which is embedded piping (33) constituting part of the heat transfer means, and an insulating layer (35) backing the heat exchange layer (32, 33).

5. A system according to Claim 4, wherein the heat-exchange layer (32, 34) is formed by a mass of thermosetting plastics material (34) which is integral with that of the upper layer and which incorporates means serving to increase the thermal conductivity of the layer.

6. A system according to Claim 1, wherein the said at least one panel (4) comprises a backing member (6) of thermally insulating material carrying a metal sheet (5) forming said upper layer, the heat transfer means being formed by pipes (8) fixed to the back of the metal sheet (5) and lying in channels in the backing member (6).

7. A system according to Claim 1, wherein the said at least one panel (4) has a thermal capacity per unit area of less than 140 KJ/m$^2$ $^\circ$C.

8. A system according to Claim 1, wherein the heat transfer means includes a heat pump (12) for heating or cooling the heat transfer fluid.

9. A heat-transfer panel characterised in that it comprises a fibre-reinforced mass (30, 34) of a thermosetting plastics material with a filler which serves to increase the thermal conductivity of the mass, and piping (33) integral with said mass (30, 34) and serving to conduct a heat transfer fluid through the panel (4), the panel (4) having a low thermal capacity per unit area.

10. A panel according to Claim 9, in which the panel (4) is provided on one side with an insulating layer (35).

11. A panel according to Claim 10, in which the insulating layer (35) is backed by one or more reinforcement layers of fibre-reinforced plastics material.

12. A panel according to Claim 9, wherein the filler is selected from sand, graphite, aluminium powder and crushed slate.

Fig.1.

Fig.2.

Fig.3.

_Fig.4._

24

14

23

13

28

DEHUMIDIFIER

INDOOR AIR

4

11

10

3/3

WASTE
WATER

29

WASTE
HEAT
RECLAIM
UNIT

26

13

16    15    17    18

HEAT STORE

25

HEAT PUMP

20

19

27

12

0133631

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | EP-A-0 047 633  (HINDS)  <br><br> * Claims 1,4,6,14 * <br><br> --- | 1,6,9, 10 | F 24 D   3/00 |
| X | DE-A-3 032 163  (SCHUH)  <br><br> * Claims 1,2,5,6,8 * <br><br> --- | 1,2,3, 6,10, 12 | |
| A | DE-A-3 106 104  (FIRMA JENS SCHWARZMANNSEDER) <br> * Abstract * <br><br> --- | 2,9 | |
| A | AT-B-  356 348  (FEIST)  <br><br> * Claims 1,2 * <br><br> --- | 1,2,3, 12 | |
| A | DE-A-2 911 579  (AGROB)  <br><br> * The whole document * <br><br> --- | 1,2,9, 3,12 | **TECHNICAL FIELDS SEARCHED (Int. Cl. ³)** <br><br> F 24 D |
| A | US-A-4 145 852  (HAHN) <br> * The whole document * <br><br> --- | 3,12 | |
| A | WO-A-8 201 386  (PFERSCHY)  <br><br> * Claims 1,8,9,12 * <br><br> --- | 1,2,8, 10 | |
| X | WO-A-8 300 056  (KULLBERG) <br> * The whole document * <br><br> ----- | 1,6,7 | |

The present search report has been drawn up for all claims

| Place of search <br> THE HAGUE | Date of completion of the search <br> 04-04-1984 | Examiner <br> VAN GESTEL H.M. |
|---|---|---|